Europäisches Patentamt

European Patent Office

Office européen des brevets

(19)

(11) Numéro de publication : **0 220 985**
**B1**

(12) **FASCICULE DE BREVET EUROPÉEN**

(45) Date de publication du fascicule du brevet :
28.03.90

(51) Int. Cl.⁵ : **G 01 M 17/04, F 16 F 9/46**

(21) Numéro de dépôt : 86402253.8

(22) Date de dépôt : 10.10.86

(54) **Procédé de contrôle d'une suspension de véhicule par mesure du facteur d'amortissement d'un signal oscillatoire de la suspension et dispositif pour la mise en oeuvre du procédé.**

(30) Priorité : 11.10.85 FR 8515084

(43) Date de publication de la demande :
06.05.87 Bulletin 87/19

(45) Mention de la délivrance du brevet :
28.03.90 Bulletin 90/13

(84) Etats contractants désignés :
DE GB IT

(56) Documents cités :
DE–A– 2 362 661
DE–A– 2 905 931
US–A– 4 458 234

(73) Titulaire : **JAEGER**
**2, rue Baudin**
**F-92303 Levallois-Perret (FR)**

(72) Inventeur : **Delevallée, Jean-Louis**
**14 Allée des Courlis**
**F-95600 Cergy Saint Christophe (FR)**
Inventeur : **Reymond, Philippe**
**26, rue Georges Boulet**
**F-91330 Yerres (FR)**

(74) Mandataire : **Martin, Jean-Jacques et al**
**Cabinet REGIMBEAU 26, Avenue Kléber**
**F-75116 Paris (FR)**

## Description

La présente invention concerne le contrôle de la suspension des véhicules automobiles.

On sait que les suspensions de véhicules automobiles sont généralement composées, pour chacune des roues, d'un ensemble, formé d'un amortisseur relié en parallèle à un ressort, disposé entre les masses suspendues et les masses non suspendues du véhicule.

On entend par masses suspendues l'ensemble des parties de la caisse du véhicule qui reposent sur la suspension ; tandis que l'on entend par masses non suspendues l'ensemble des masses mobiles par rapport à la caisse, et en particulier les roues et triangles de suspension. Le cas échéant, les masses non suspendues comprennent également les freins et une partie des amortisseurs.

Le ressort de la suspension a pour fonction première de limiter la propagation, vers la caisse du véhicule, des mouvements verticaux des roues, afin d'accroître le confort routier.

Néanmoins, après avoir encaissé une irrégularité de la route le ressort ne retrouve pas rapidement sa position d'équilibre stable. L'énergie qu'il a emmagasinée tend à induire des oscillations de la caisse ainsi que des chocs et rebonds de la roue sur le sol pendant lesquels cette énergie se dissipe en chaleur.

Pour éviter cet inconvénient, on a proposé depuis longtemps de placer en parallèle du ressort un amortisseur dont le rôle est précisément de dissiper l'énergie emmagasinée dans le ressort, donc d'empêcher la création de mouvements parasites nocifs pour la qualité du confort et de la tenue de route.

L'amortisseur le plus couramment usité se compose d'un corps lié rigidement aux masses non suspendues, qui définit une chambre principale remplie d'un fluide hydraulique, d'une tige coulissante, liée rigidement à la caisse du véhicule et à un piston percé de trous calibrés et équipés de clapets, qui se déplace dans la chambre principale, et d'une chambre secondaire, dite de compensation, remplie partiellement de gaz et de fluide hydraulique, qui communique avec la chambre principale par l'intermédiaire de clapets.

Néanmoins, d'autres types d'amortisseurs pour suspension de véhicules ont été proposés.

La présente invention n'est pas limitée à un type d'amortisseur particulier.

La fonction de l'amortisseur est donc de transformer en chaleur l'énergie mécanique de mouvement de sa tige. Pour cela, l'amortisseur oppose au mouvement de sa tige une force sensiblement proportionnelle à la vitesse de cette dernière.

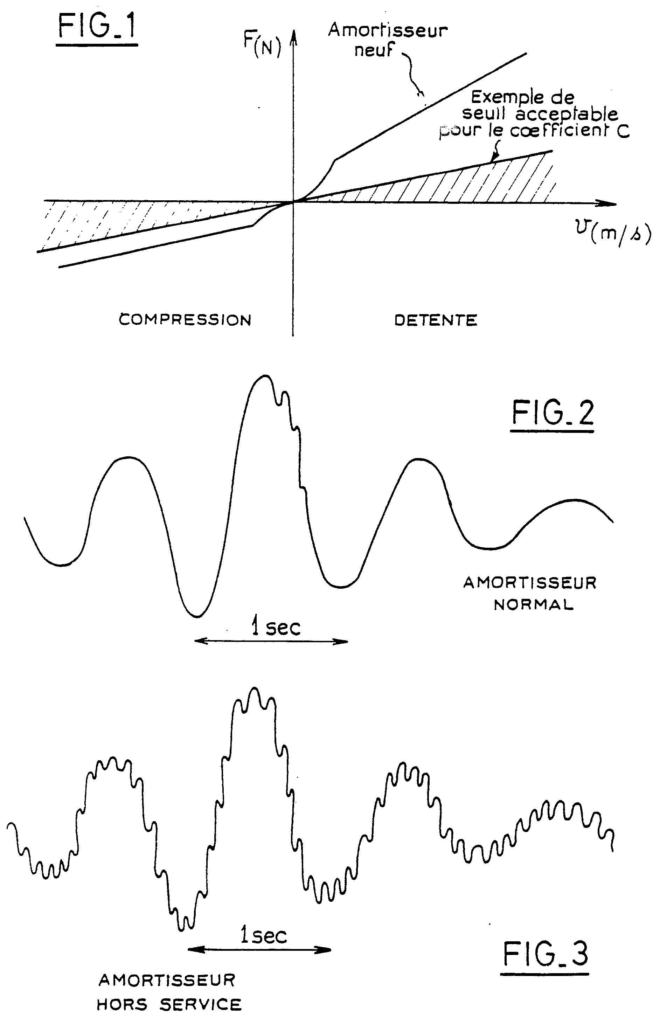

On a représenté schématiquement, sur la figure 1 annexée, la courbe : force appliquée sur la tige/vitesse, d'un amortisseur.

Chaque partie de cette courbe, force appliquée sur la tige/vitesse de la tige, correspondant respectivement à la détente et à la compression de l'amortisseur, comporte deux zones.

La zone de courbe linéaire correspond aux conditions de fonctionnement où le fluide hydraulique circule par les clapets.

Quand la vitesse de la tige diminue la pression du fluide atteint une valeur seuil au-dessous de laquelle les clapets ne peuvent plus fonctionner. Le fluide hydraulique circule alors par les orifices calibrés. Cela correspond à la seconde zone de la courbe, de type parabolique.

On sait néanmoins que le vieillissement a pour effet de diminuer la viscosité du fluide hydraulique et d'abaisser progressivement l'efficacité des multiples étanchéités de l'amortisseur, notamment au niveau des joints et clapets.

Cela provoque bien sûr un affaissement de la caractéristique force/vitesse. Cet affaissement peut d'ailleurs apparaître uniquement sur une des zones de la courbe (zone linéaire ou parabolique) avant de s'étendre aux suivantes.

On sait par ailleurs que l'état de la suspension influence dans une large mesure la tenue de route du véhicule.

Il est donc souhaitable de disposer de moyens permettant de contrôler la suspension des véhicules.

De nombreux moyens de contrôle à cet effet ont déjà été proposés. Toutefois, ces moyens ne donnent pas pleinement satisfaction.

On a ainsi proposé, comme décrit dans le brevet US-A-2 923 147 et dans le brevet Italien 431 283, des moyens de contrôle mécaniques. L'utilisation de ces moyens est cependant limitée aux garages d'entretien. De plus, ces moyens ne permettent qu'un contrôle statique. Enfin, ces moyens ne permettent pas un contrôle fréquent voire continu de la suspension. Au mieux, ces moyens mécaniques sont utilisés généralement à une fréquence de l'ordre de une fois par an.

On a également proposé, comme décrit dans les brevets US-A-3 921 945 et US-A-3 937 152, des moyens de détection des vibrations d'un véhicule. Cette disposition ne permet pas cependant de réaliser un contrôle précis et fiable.

On a également proposé, comme décrit dans les brevets GB-A-1 483 231 et US-A-4 317 105, des moyens sensibles à l'accélération du véhicule dans la direction verticale. Là encore, cependant, les dispositions de ce type jusqu'ici proposées ne permettent pas de réaliser un contrôle précis et fiable.

On a également proposé, comme décrit dans le brevet GB-A-1 508 527, de comparer les caractéristiques force et vitesse d'un amortisseur en utilisant deux capteurs sensibles respectivement à ces données. Les moyens de test décrits dans ce document ne permettent pas cependant de contrôler de façon précise et fiable l'ensemble de la courbe force/vitesse.

On a également proposé, comme décrit dans les brevets US-A-3 833 094 et US-A-3 646 512 d'utiliser

2

des détecteurs de surcharge. Ces dispositifs ne permettent qu'une détection du type tout ou rien et ne permettent pas de renseigner sur l'état de la suspension.

On a également proposé d'utiliser des jauges de contrainte pour mesurer les forces exercées en divers points de la suspension. De tels dispositifs sont par exemple décrits dans les brevets US-A-4 458 234, DE-A-2 351 862 et DE-A-2 341 423. Ces documents cependant se contentent d'évoquer, pour l'exploitation des signaux électriques délivrés par les jauges, l'agencement de ces jauges en pont ou encore la mesure des variations d'amplitude, positives ou négatives, des forces exercées sur l'amortisseur et/ou le ressort. Ces dispositions ne délivrent qu'une information globale sur le fonctionnement de la suspension et ne permettent pas de délivrer une information précise et fiable sur l'état de la suspension utile au conducteur.

On a également proposé, comme décrit dans le document DE-A-2362661, de générer à l'aide d'un capteur un signal électrique représentatif des oscillations de la suspension, de filtrer le signal électrique pour retenir certaines fréquences seulement de celui-ci, puis de faire le quotient d'extrêma du signal retenu et de comparer ce quotient à une référence.

Le problème posé est de concevoir une technique de mesure permettant de détecter de façon fiable, économique et continue, à l'aide de moyens embarcables, l'état de la suspension.

L'un des buts principaux de la présente invention est de concevoir des moyens de mesure économiques, appropriés pour être installés en série sur les véhicules automobiles sans grever de façon significative le prix de revient de ceux-ci.

Le problème ainsi posé est résolu selon la présente invention par la mise en œuvre d'un procédé de contrôle de la suspension d'un véhicule qui comprend les étapes consistant à :

i) générer à l'aide d'un capteur du signal électrique représentatif des oscillations de la suspension,

ii) filtrer le signal électrique pour retenir uniquement les oscillations générées par les masses non suspendues du véhicule et l'effet du pneumatique (et notamment éliminer les oscillations basse fréquence créées par les masses suspendues du véhicule et le ressort de suspension),

iii) déterminer le rapport entre deux extréma du signal filtré, ce procédé étant caractérisé selon la présente invention par le fait que l'étape ii) de filtrage consiste à retenir uniquement les oscillations générées à une fréquence de l'ordre de 12 Hz, et à éliminer notamment les oscillations créées à une fréquence de l'ordre de 1 Hz, ainsi que les fréquences supérieures à 15 Hz, le procédé étant en outre caractérisé par le fait qu'il comprend l'étape supplémentaire consistant à iv) déterminer la valeur d'un paramètre représentatif du coefficient de frottement visqueux de l'amortisseur sur la base de la relation :

$$C = E \frac{Ln \dfrac{S_{11}}{S_{12}}}{\sqrt{\pi^2 + Ln^2 \dfrac{S_{11}}{S_{12}}}} + G \qquad (32)$$

relation dans laquelle :

E et G représentent des constantes liées aux caractéristiques du véhicule et

$S_{11}$ et $S_{12}$ représentent les amplitudes de deux extrema successifs.

Ce procédé est basé sur la démonstration théorique (qui sera rappelée dans la description détaillée qui va suivre) et la vérification expérimentale, établies par la Demanderesse, selon lesquelles, à la suite d'une excitation due au profil de la route, l'ensemble composé des masses suspendues du véhicule et du ressort de suspension génère une oscillation de base de basse fréquence, généralement de l'ordre de 1 Hz à laquelle se superpose une oscillation parasite de fréquence supérieure, généralement de l'ordre de 12 Hz, induite par l'ensemble composé des masses non suspendues du véhicule et de « l'effet ressort » du pneumatique, mais, et c'est là une constatation essentielle, le taux d'amortissement des oscillations parasites dépend beaucoup plus de l'état de l'amortisseur, que le taux d'amortissement des oscillations de base.

En d'autres termes, un amortisseur en bon état atténue convenablement les oscillations parasites dues aux masses non suspendues du véhicule et à l'effet ressort du pneumatique. Par contre, un amortisseur présentant une usure n'atténue pas correctement ces oscillations parasites, et par conséquent n'évite pas les rebonds responsables du décollement de la roue par rapport au sol, et de ce fait n'assure pas une tenue de route correcte.

L'influence de l'usure de l'amortisseur sur le niveau d'amortissement des oscillations de base de 1 Hz est en revanche moins nette.

En effet, le faible couplage mécanique entre les différents étages de la suspension évite toute perturbation des signaux de 12 Hz. Alors que par contre, chaque demi-essieu se trouvant influencé par son homologue par l'intermédiaire de la masse suspendue, cela crée des interférences dans les signaux de base de 1 Hz.

Il est de plus avantageux d'utiliser des capteurs travaillant essentiellement dans les fréquences supérieures à 10 Hz, dans la mesure où de tels capteurs sont en général moins coûteux que ceux travaillant à des fréquences inférieures.

Le cas échéant, l'étape ii) de filtrage peut être réalisée par le capteur lui-même travaillant dans une plage de fréquences étroite centrée sur la fréquence des oscillations générées par les masses non suspendues et l'effet ressort du pneumatique.

Selon une variante de réalisation conforme à la présente invention, le paramètre déterminé à l'étape iv) peut être obtenu à l'aide d'une table de correspondance entre les rapports d'extrema $S_{11}$ et $S_{12}$ d'une part et la valeur recherchée du paramètre d'autre part.

Cette table de correspondance peut être remplie, soit à l'aide de la relation (32) précitée, soit sur la base d'une approximation de la courbe définie par cette relation sous forme d'une succession de segments linéaires de pentes différentes.

Ces deux variantes de réalisation seront explicitées plus en détail par la suite.

Selon une autre caractéristique préférentielle, le procédé de contrôle conforme à la présente invention comprend de plus l'étape intermédiaire consistant à éliminer les valeurs du rapport d'extrema $S_{11}/S_{12}$ établi à l'étape iii) qui ne sont pas comprises dans une gamme prédéterminée, de préférence entre 1 et 3.

Cette disposition permet en particulier d'éliminer les réponses dues à une excitation du type profil périodique tel que des pavés, et de ne retenir que la réponse due à une excitation du genre profil occasionnel assimilable à la fonction créneau, tel que la marche d'un trottoir.

Pour améliorer la précision de la mesure, le procédé de contrôle conforme à la présente invention comprend de préférence la réitération de l'étape iii) pour une pluralité de paire d'extrema successifs et l'établissement d'une moyenne de l'ensemble des rapports obtenus.

De préférence, pour améliorer encore la précision de la mesure, le procédé de test conforme à la présente invention comprend en outre l'étape consistant à éliminer les valeurs de rapports d'extrema qui s'écartent de la moyenne de l'ensemble des rapports obtenus, d'au moins une valeur de tolérance prédéterminée, et à établir une seconde moyenne sur la base des rapports non éliminés.

Selon une autre caractéristique avantageuse de l'invention, le procédé conforme à la présente invention compred de plus l'étape supplémentaire consistant à comparer la valeur du paramètre établi à l'étape iv) avec une valeur de seuil et à afficher une alarme lorsque la valeur du paramètre tombe en dessous de la valeur seuil.

Selon une autre variante, le procédé de contrôle conforme à la présente invention comprend l'étape supplémentaire consistant à exploiter, par exemple en visualisant, une information analogique liée à la valeur du paramètre déterminé à l'étape iv).

La présente invention concerne de plus un dispositif de contrôle pour la mise en œuvre du procédé précité et une application.

D'autres caractéristiques et avantages de la présente invention apparaîtront à la lecture de la description détaillée qui va suivre, et en regard des dessins annexés donnés à titre d'exemple non limitatif et sur lesquels :

— la figure 1 représente schématiquement la caractéristique force/vitesse d'un amortisseur,

— la figure 2 représente le signal électrique mesuré en sortie d'un capteur disposé sur un ressort de suspension associé à un amortisseur en état de fonctionnement correct, lors du franchissement d'un raccord de goudron à une vitesse de 80 Km/h.

— la figure 3 représente le signal électrique mesuré en sortie d'un capteur de déplacement similaire fixé sur le ressort d'une suspension comportant un amortisseur hors service, lors du franchissement du même raccord de goudron à la vitesse de 80 Km/h,

— les figures 4A et 4B représentent schématiquement la modélisation des masses suspendues du véhicule,

— les figures 5A et 5B représentent schématiquement la modélisation des masses non suspendues du véhicule,

— la figure 6 représente schématiquement la réponse d'un capteur placé sur le ressort de la suspension, à la suite d'une excitation du type profil occasionnel,

— la figure 7 représente schématiquement le signal obtenu après filtrage, d'une fréquence de l'ordre de 12 Hz due aux masses non suspendues du véhicule et à l'effet ressort du pneumatique,

— les figures 8, 9 et 10 représentent diverses courbes qui seront explicitées dans le détail par la suite, et

— la figure 11 représente une vue schématique du dispositif conforme à la présente invention.

La même échelle a été utilisée pour la représentation des figures 2 et 3.

Une simple comparaison des signaux illustrés sur ces figures montre que, comme cela était précédemment indiqué, le taux d'amortissement des oscillations parasites de 12 Hz dépend beaucoup plus de l'état de l'amortisseur que le taux d'amortissement des oscillations de base de 1 Hz.

En effet, ces oscillations de base possèdent sensiblement la même amplitude sur les figures 2 et 3 ce qui signifie que l'état de l'amortisseur influence peu le niveau d'atténuation des oscillations de base.

Par contre, on remarquera que si pour un amortisseur en état de fonctionnement normal, les oscillations parasites de 12 Hz sont quasi-totalement amorties, comme représenté sur la figure 2, par contre, dans le cas d'un amortisseur hors service, comme illustré sur la figure 3, l'amplitude des oscillations parasites de 12 Hz est non négligeable.

La demanderesse a par ailleurs appuyé ses constatations expérimentales par une démonstration théorique que l'on va expliciter par la suite pour la bonne compréhension de la présente invention.

4

EP 0 220 985 B1

L'analyse théorique qui suit est basée d'une part sur l'exploitation d'un modèle de courbe force/allongement d'allure linéaire pour le ressort, c'est-à-dire un modèle répondant à la relation :

(1) $F_r = - k \cdot A_1$ dans laquelle $F_r$ répésente la force développée par le ressort,

k représente la raideur du ressort, et $A_1$ représente l'allongement du ressort, et d'autre part sur l'exploitation d'un modèle de courbe force/vitesse, d'allure linéaire et de même pente quelle que soit la phase d'utilisation, compression ou détente, pour l'amortisseur, c'est-à-dire un modèle répondant à la relation :

(2) $F_a = - c \cdot v$ dans laquelle $F_a$ représente la force développée par l'amortisseur,

c représente le coefficient de frottement visqueux, et

v représente la vitesse de la tige.

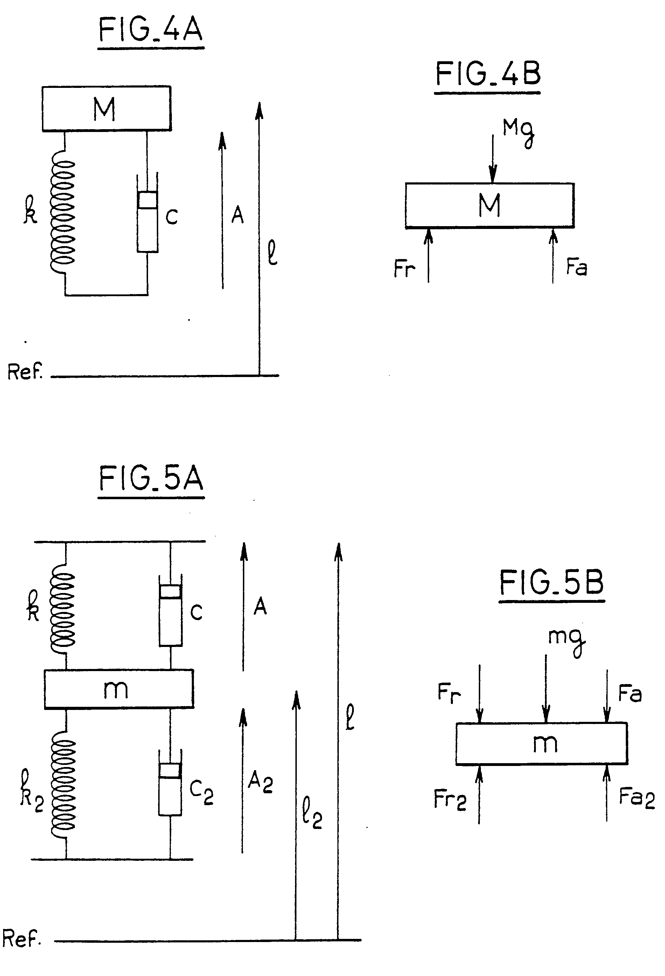

Le bilan des forces exercées au niveau des masses suspendues (schématisées sur les figures 4A, 4B) permet d'écrire d'une part en statique :

$$\begin{aligned} Mg &= F_r + F_a \\ &= F_r \\ &= - k(A_0 - A_1) \end{aligned} \quad (3)$$

relation dans laquelle :

M représente la valeur de la masse suspendue

$A_0$ représente l'élongation du ressort au repos et

$A_1$ représente l'allongement du ressort dû à la masse suspendue, d'autre part en dynamique :

$$M\ddot{l} = F_r + F_a - M_g = M\ddot{x} \quad \text{soit} \quad (4)$$

$$M\ddot{x} + c\dot{x} + kx = c\dot{x}_2 + kx_2 \quad (5)$$

relations dans lesquelles : 1 représente la hauteur de la masse suspendue, par rapport à une référence,

x représente le déplacement de la masse suspendue, et

$x_2$ représente le déplacement de la masse non suspendue.

Par ailleurs le bilan des forces exercées au niveau des masses non suspendues (schématisées sur les figures 5A, 5B) permet d'écrire, d'une part en statique :

$$\begin{aligned} mg &= F_r + F_a + F_{r2} + F_{a2} \\ &= F_r + F_{r2} \\ &= k(A_0 - A_1) - k_2(A_{20} - Al_2) \end{aligned} \quad (6)$$

relation dans laquelle : m représente la valeur de la masse non suspendue,

$F_{r2}$ représente la force exercée sur la masse non suspendue résultant de l'élasticité du pneumatique,

$F_{a2}$ représente la force exercée sur la masse non suspendue résultant de l'effet d'amortisseur dû aux fibres du pneumatique,

$k_2$ représente la raideur du pneumatique

$A_{20}$ représente l'élongation au repos de l'élément ressort formé par le pneumatique, et

$Al_2$ représente l'allongement de cet élément dû aux masses mises en jeu, d'autre part en dynamique :

$$M\ddot{l}_2 = F_r + F_a + F_{r2} + F_{a2} - mg = m\ddot{x}_2 \quad \text{soit} \quad (7)$$

$$m\ddot{x}_2 + (c + c_2)\dot{x}_2 + (k + k_2)x_2 = (c_2\dot{x}_1 + k_2x_1) + (c\dot{x} + kx_1) \quad (8)$$

$l_2$ représente la hauteur de la masse non suspendue,

$x_2$ représente le déplacement de la masse non suspendue,

$c_2$ représente le coefficient de frottement visqueux et l'effet d'amortisseur dû aux fibres du pneumatique, et

$x_1$ représente le déplacement du pneumatique.

En posant :

$$\omega = \sqrt{\frac{k}{M}} = \text{pulsation propre de la masse suspendue,}$$

$$\gamma = \frac{c}{2\,M\omega} = \text{coefficient d'amortissement de la suspension,}$$

5

$$\omega_1 = \sqrt{\frac{k}{m}} = \text{pulsation propre du demi-essieu par rapport à la masse suspendue,}$$

$$\gamma_1 = \frac{c}{2\,m\omega_1} = \text{coefficient d'amortissement du demi-essieu par rapport à la masse suspendue,}$$

$$\omega_2 = \sqrt{\frac{k_2}{m}} = \text{pulsation propre du demi-essieu par rapport au sol,}$$

$$\gamma_2 = \frac{c_2}{2\,m\omega_2} = \text{coefficient d'amortissement du demi-essieu par rapport au sol,}$$

les équations (5) et (8) s'écrivent :

$$\ddot{x} + 2\,\gamma\omega\dot{x} + \omega^2\,x = 2\,\gamma\omega\dot{x}_2 + \omega^2\,x_2 \quad \text{et} \tag{9}$$

$$\ddot{x}_2 + 2(\gamma_1\,\omega_1 + \gamma_2\,\omega_2)\,\dot{x}_2 + (\omega_1^2 + \omega_2^2)\,x_2 = (2\,\gamma_2\,\omega_2\,\dot{x}_1 + \omega_2^2\,x_1) + (2\,\gamma_1\,\omega_1\,\dot{x} + \omega_1^2\,x) \tag{10}$$

En utilisant les transformées de Laplace, les équations (9) et (10) s'écrivent alors :

$$(p^2\,X) + 2\,\gamma\omega\,(pX) + \omega^2\,X = 2\,\gamma\omega\,(pX_2) + \omega^2\,X_2 \quad \text{et} \tag{11}$$

$$(p^2\,X_2) + 2(\gamma_1\,\omega_1 + \gamma_2\,\omega_2)\,(pX_2) + (\omega_1^2 + \omega_2^2)\,X_2 = 2\,\gamma_2\,\omega_2(pX_1) + \omega_2^2\,X_1 + 2\,\gamma_1\,\omega_1(pX) + \omega_1^2\,X \tag{12}$$

soit :

$$X = \frac{N_1}{D}\cdot X_1 \quad \text{et} \tag{13}$$

$$X_2 = \frac{N_2}{D}\cdot X_1 \quad \text{avec} \tag{14}$$

$$N_1 = \omega\omega_2[4\,\gamma\gamma_2\,p^2 + 2(\gamma\omega_2 + \gamma_2\,\omega)\,p + \omega\omega_2] \tag{15}$$

$$N_2 = 2\,\gamma_2\,\omega_2\,p^3 + (4\,\gamma\gamma_2\,\omega\omega_2 + \omega_2^2)\,p^2 + 2\,\omega\omega_2(\gamma_2\,\omega + \gamma\omega_2)\,P + \omega^2\,\omega_2^2 \quad \text{et} \tag{16}$$

$$D = p^4 + 2(\gamma\omega + \gamma_1\,\omega_1 + \gamma_2\,\omega_2)\,p^3 + (\omega^2 + \omega_1^2 + \omega_2^2 + 4\,\gamma\gamma_2\,\omega\omega_2)\,p^2 + 2\,\omega\omega_2(\gamma_2\,\omega + \gamma\omega_2)\,p + \omega^2\,\omega_2^{2'}. \tag{17}$$

Les formules (13) et (14) donnent donc les évolutions du mouvement de la caisse (X) et du mouvement de la roue ($X_2$) par rapport à une référence absolue et en fonction du profil de la route ($X_1$).

Le calcul montre que les quatre racines du dénominateur D (17) sont des nombres complexes conjugués deux à deux.

Ceci exprime que le filtre mécanique que réalise la suspension peut se décomposer en deux filtres du second ordre.

Par ailleurs un calcul numérique montre que ces deux filtres possèdent des fréquences de coupure se situant aux alentours de 1 Hz et de 12 Hz.

La fréquence de coupure de 1 Hz est créée par les masses suspendues du véhicule et le ressort de suspension.

La fréquence de coupure de 12 Hz est générée par les masses non suspendues du véhicule et l'effet ressort du pneumatique.

Dans le cas d'une excitation de la suspension par un profil occasionnel assimilable à la fonction créneau susceptible d'engendrer une variation brutale de l'écrasement du ressort, tel qu'une marche de trottoir, le déplacement de la suspension répond à la relation suivante, en se déplaçant dans le domaine temporel :

$$s(t) = s_1(t) + s_2(t)$$
$$= \frac{Ad_1}{v}\,B_1\,\exp^{-Z_A\,W_A\,t}\cdot\sin\,(W_{Ad}\,t + \varphi_1) + \frac{Ad_1}{v}\,B_2\,\exp^{-Z_B\,W_B\,t}\cdot\sin\,(W_{Bd}\,t + \varphi_2) \tag{18}$$

relation dans laquelle :

A représente l'amplitude de l'excitation
$d_1$ représente la longueur de l'excitation
v représente la vitesse du véhicule

$Z_A$, $Z_B$ représentent les facteurs d'amortissement de chacun des filtres,
$W_A$, $W_B$ représentent les pulsations de coupure de chacun des filtres,
$\varphi_1$, $\varphi_2$ représentent les déphasages des signaux

$$W_{Ad} = W_A \sqrt{1 - Z_A^2}$$
$$W_{Bd} = W_B \sqrt{1 - Z_B^2}$$

$B_1$, $B_2$ représentent les coefficients d'amplitude.

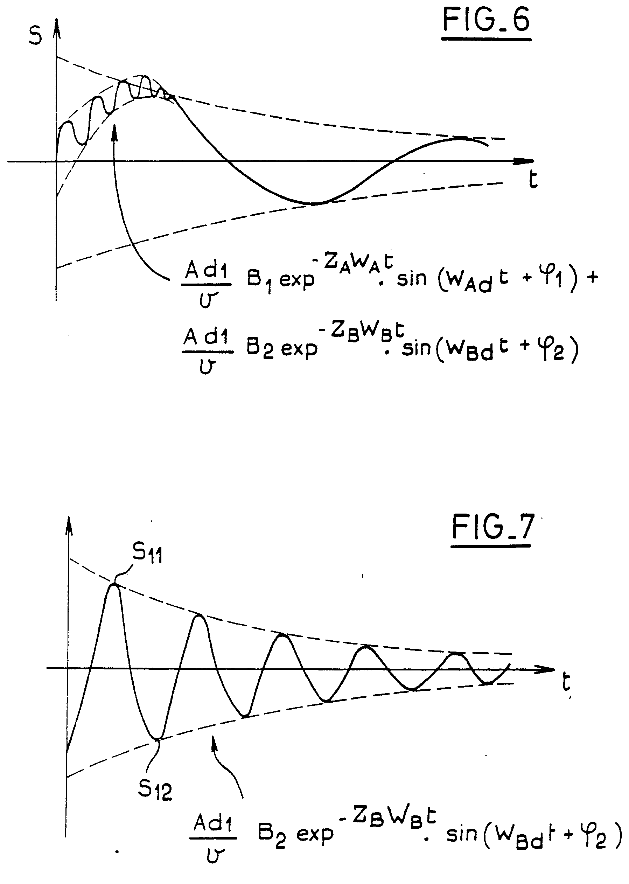

On a représenté schématiquement sur les figures 6 et 7 les signaux $s(t)$ et $s_2(t)$.

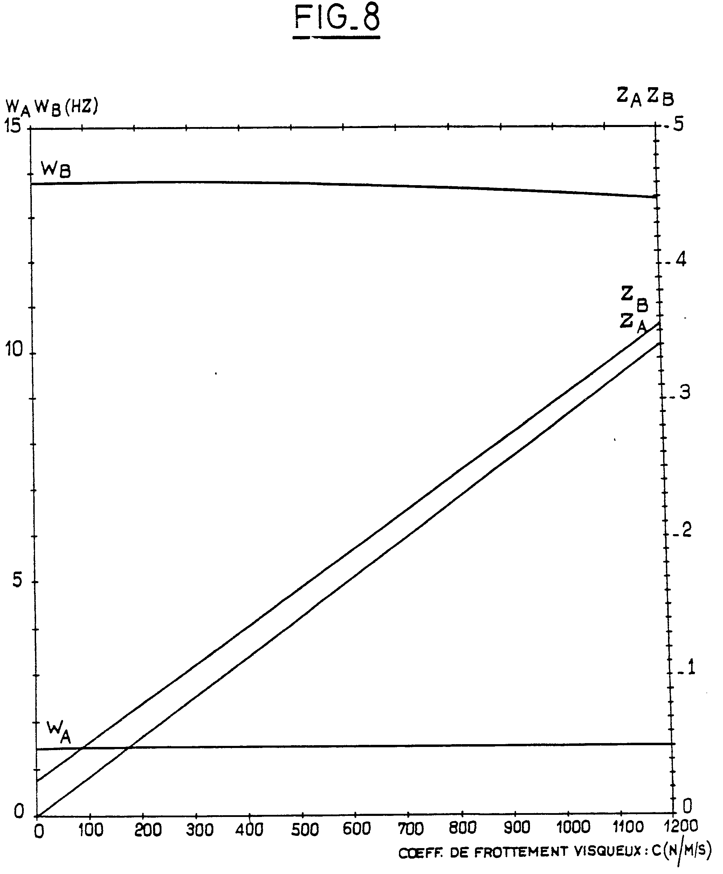

Les paramètres $W_A$, $W_B$, $Z_A$, et $Z_B$ sont représentés sur la figure 8 en fonction du coefficient de frottement visqueux.

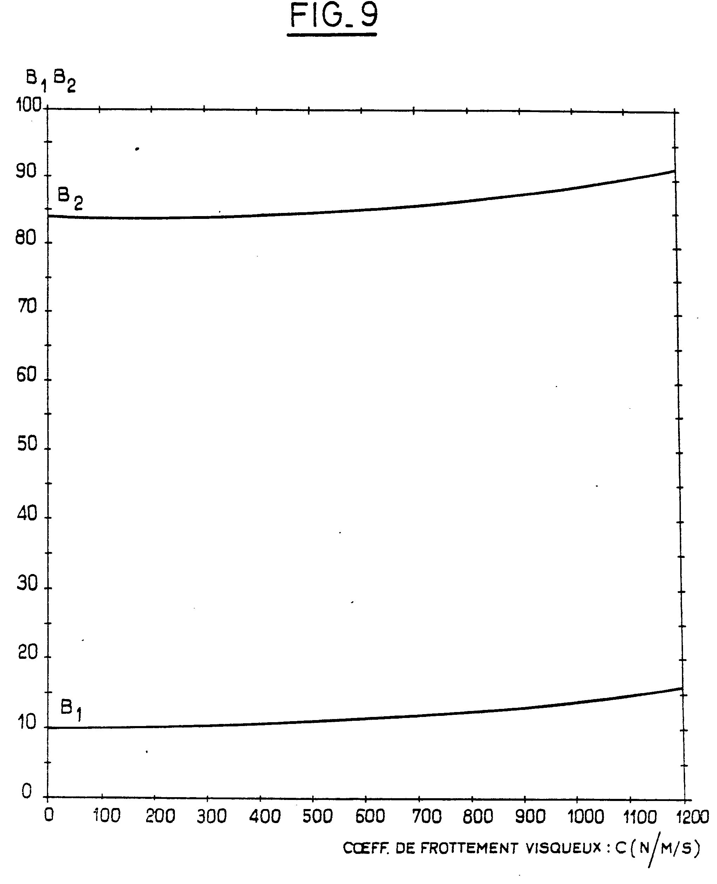

Par ailleurs, on montre que le coefficient $B_2$ correspondant au signal parasite de 12 Hz est bien supérieur à celui $B_1$ du signal de base, comme illustré sur la figure 9 qui illustre ces paramètres en fonction du coefficient de frottement visqueux.

En effet,

$$B_1 = \frac{1}{\varepsilon} \sqrt{\frac{(\beta - \alpha Z_A W_A)^2 + \alpha^2 W_{Ad}^2}{W_{Ad}^2}} \tag{19}$$

$$B_2 = \frac{1}{\varepsilon} \sqrt{\frac{(\delta - \mu Z_B W_B)^2 + \mu^2 W_{Bd}^2}{W_{Bd}^2}} \tag{20}$$

avec

$$\alpha = -2 W_A W_B [Z_A W_B^2 + \gamma_2 W_A^2 + \gamma_2 W_A W_B (1 - 4 Z_A^2)] \tag{21}$$

$$\beta = -W_A^2 W_B^2 [W_B + W_A (1 - 4 Z_A \gamma_2)] \tag{22}$$

$$\mu = 2 W_B^3 [\gamma_2 W_B + W_A (Z_A + \gamma_2 - 4 Z_A^2 \gamma_2)] \tag{23}$$

$$\delta = W_B^4 [W_B + W_A (1 - 4 Z_A \gamma_2)] \tag{24}$$

$$\varepsilon = (W_B - W_A)[W_A^2 + W_B^2 + 2 W_A W_B (1 - 2 \gamma^2)] \tag{25}$$

En faisant les approximations suivantes, justifiées par le tracé des courbes sur la figure 8 :

$$Z_A = a\gamma \tag{26}$$

$$\gamma_2 \cong 0 \tag{27}$$

$$W_A = \omega \quad \text{et} \tag{28}$$

$$W_B = \omega_2 + b \tag{29}$$

On obtient à partir des équations précédentes :

$$c = \frac{(2 k_2 + k) Z_B}{\omega_2} - \sqrt{m k_2 \cdot \gamma_2} \tag{30}$$

On remarque donc que le coefficient $c$ de l'amortisseur est proportionnel à l'amortissement $Z_B$ de la réponse de la fréquence de 12 Hz.

Or ce facteur d'amortissement peut se déterminer facilement à partir d'un signal de déplacement ou de vitesse du débattement de la suspension.

En appelant en effet $S_{11}$ et $S_{12}$ les amplitudes de deux extrema successifs du signal de 12 Hz, c'est-à-dire deux extrema successifs du second membre de la relation (18) on obtient :

$$Z_B = \frac{Ln \dfrac{S_{11}}{S_{12}}}{\sqrt{\pi^2 + Ln^2 \dfrac{S_{11}}{S_{12}}}} \tag{31}$$

relation dans laquelle Ln représente la fonction logarithme népérien.

Le coefficient $c$ de l'amortisseur peut donc aisément être déterminé sur la base des relations (30) et (31).

7

La combinaison des relations (30) et (31) permet en effet d'obtenir la relation (32) précitée.

On remarquera de plus que ce traitement de signal permet la détermination du coefficient c de l'amortisseur tout en s'affranchissant parfaitement de l'amplitude du profil de la route.

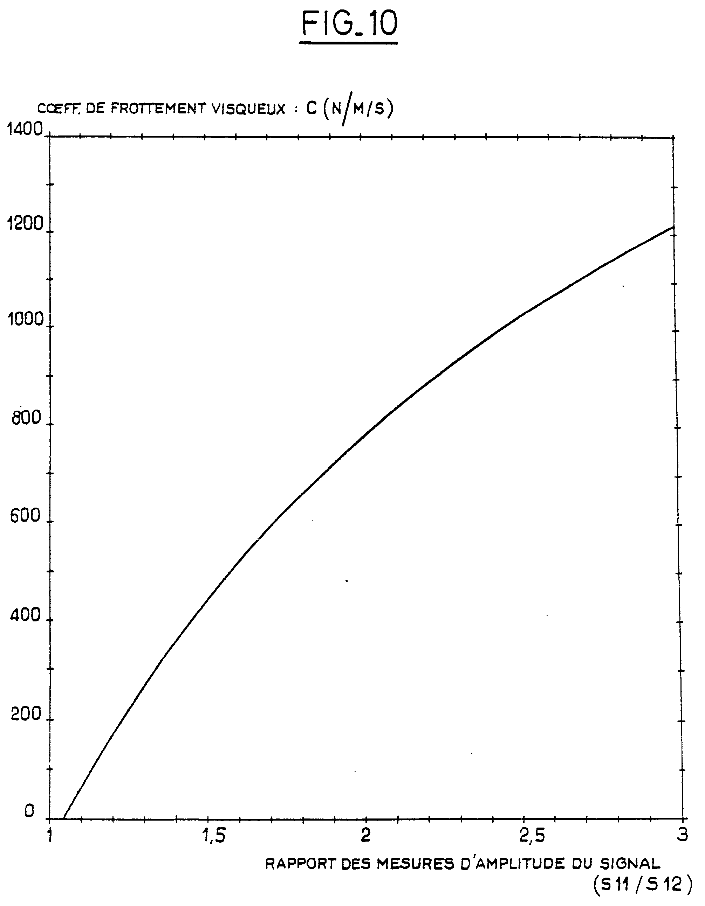

Le tracé de la courbe c en fonction du rapport $S_{11}/S_{12}$, sur la figure 10 annexée montre que le coefficient c présente un bon rapport de proportionnalité avec ce rapport $S_{11}/S_{12}$ et par conséquent le coefficient c peut être déterminé sur la base d'une approximation de cette courbe sous forme d'une succession de segments linéaires de pentes différentes.

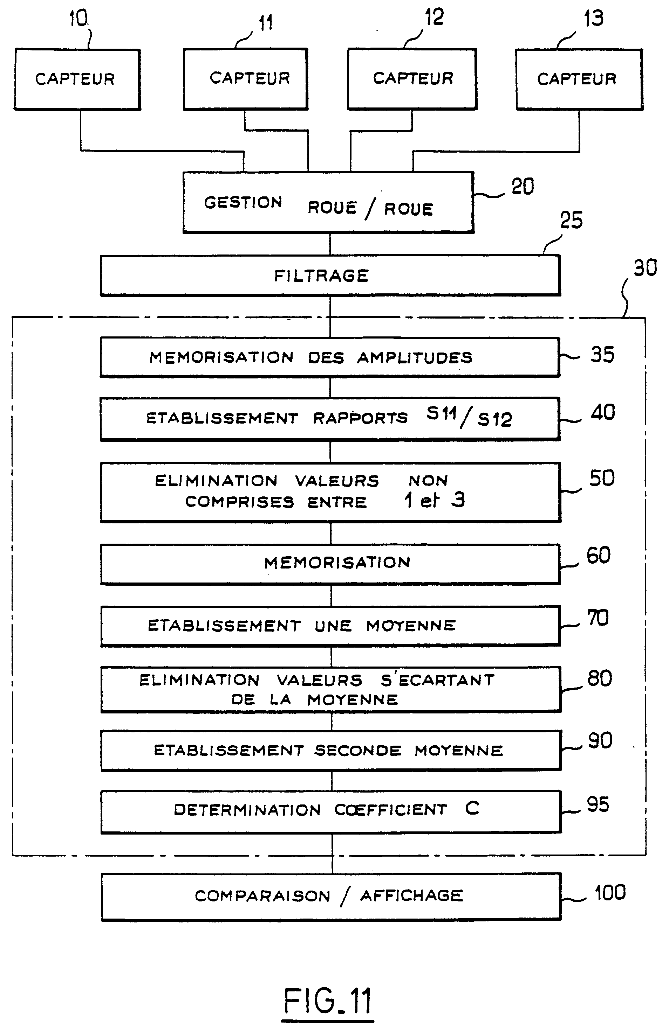

On va maintenant décrire le dispositif de test conforme à la présente invention tel qu'illustré schématiquement sur la figure 11.

Chacune des suspensions est équipée d'un capteur 10, 11, 12, 13 adapté pour générer un signal électrique représentatif des oscillations de la suspension.

Ce capteur pourra indifféremment être un capteur de force, composé par exemple d'une cellule piézoélectrique, intercalé entre le ressort de la suspension et les masses suspendues ou les masses non suspendues, un capteur sensible ou déplacement relatif masses suspendues/masses non suspendues, par exemple formé d'une cellule piezoélectrique disposés entre deux spires du ressort de la suspension, dans le cas d'un ressort à boudin, un capteur de force placé sur l'amortisseur de la suspension, ou encore un accéléromètre placé sur les masses non suspendues.

Les signaux électriques délivrés par les capteurs 10, 11, 12 et 13 sont de préférence appliqués à un organe de multiplexage 20 permettant d'opérer un traitement en séquence, roue par roue, des signaux issus des différents capteurs.

Néanmoins, le cas échéant chaque capteur 10, 11, 12, 13 peut être associé à une chaîne de traitement spécifique.

Ces signaux électriques sont appliqués à une cellule de filtrage 25 qui est adaptée pour retenir uniquement les oscillations générées par les masses non suspendues du véhicule et l'effet ressort du pneumatique.

La cellule de filtrage 25 est de préférence une cellule passe bande adaptée pour éliminer les oscillations basse fréquence de l'ordre de 1 Hz créées par les masses suspendues du véhicule et le ressort de suspension, ainsi que les fréquences supérieures aux oscillations générées par les masses non suspendues du véhicule et l'effet ressort du pneumatique.

Les moyens de filtrage 25 peuvent posséder par exemple une bande passante allant de 9 à 15 Hz.

Les signaux électriques filtrés oar la cellule 25 sont ensuite appliqués à des moyens de traitement 30. Au niveau de ceux-ci les signaux électriques sont tout d'abord mémorisés dans une mémoire 35.

Les moyens de traitement 30 calculent (étape 40) le rapport $S_{11}/S_{12}$ entre deux extrema successifs des signaux mémorisés.

Les moyens de traitement 30 comparent ensuite (étape 50) la valeur des rapports déterminés précédemment à l'étape 40 aux bornes d'une gamme prédéterminée de valeurs, de préférence 1 et 3, pour déterminer si les rapports établis à l'étape 40 sont compris ou non dans cette gamme.

Dans la négative, les rapports calculés sont éliminés par les moyens de traitement 30 car considérés comme non significatifs, et notamment susceptibles d'être générés à la suite d'une excitation du type profil périodique non exploitable dans le cadre de la présente invention.

Par contre, dans l'affirmative, c'est-à-dire dans le cas où les valeurs des rapports calculés à l'étape 40 sont comprises dans la gamme prédéterminée, les valeurs de ces rapports sont mémorisées dans des moyens 60.

Les moyens de traitement 30 établissent alors à l'étape 70 la moyenne des valeurs mémorisées dans les moyens 60.

Des moyens de comparaison 80 déterminent ensuite l'écart existant entre chacun des rapports établis par les moyens de traitement 30 à l'étape 40 et la moyenne issue des moyens 70.

Si cet écart est inférieur à un seuil prédéterminé, le rapport établi par les moyens de traitement 30 à l'étape 40 est validé et mémorisé.

Par contre, si l'écart précité est supérieur au seuil prédéterminé, les valeurs de rapport correspondantes établies par les moyens de traitement 30 à l'étape 40 sont éliminées.

Puis les moyens de traitement 30 établissent à l'étape 90 une seconde moyenne sur la base des valeurs de rapport non éliminées à l'étape 80.

La valeur de cette moyenne établie par les moyens de traitement 30 à l'étape 90 est utilisée pour déterminer à l'étape 95 la valeur d'un paramètre représentatif du coefficient de frottement visqueux c de l'amortisseur.

Pour ce faire, selon une première variante de réalisation conforme à la présente invention, la valeur du paramètre recherché c est déterminée sur la base de la relation (32) dans laquelle $S_{11}/S_{12}$ représente la valeur de la moyenne établie par les moyens de traitement 30 à l'étape 90.

Selon une seconde variante de réalisation conforme à la présente invention, la valeur du paramètre recherché c peut être obtenue à l'aide d'une table de correspondance entre les rapports d'extrema $S_{11}/S_{12}$ d'une part et la valeur recherchée du paramètre d'autre part.

Cette table de correspondance peut être définie, soit à l'aide de la relation (32) précitée, soit sur la base d'une approximation de la courbe définie par cette relation sous forme d'une succession de segments linéaires de pentes différentes.

8

Les phases de traitement du signal précédemment décrites sont suivies d'une étape d'exploitation, comme par exemple une détection d'alarme et le cas échéant de visualisation sur des moyens 100.

Cette étape de détection d'alarme et de visualisation peut consister à comparer la valeur du paramètre précité c avec une valeur de seuil et afficher une alarme lorsque la valeur calculée du coefficient de frottement c tombe en dessous de la valeur seuil, soit à visualiser directement une information analogique représentative du coefficient de frottement visqueux c.

Bien entendu, la présente invention n'est pas limitée au mode de réalisation qui vient d'être décrit mais s'étend à toute variante conforme à ses revendications.

Le paramètre représentatif du coefficient c peut en particulier être déterminé sur la base d'extrema qui ne sont pas successifs, en adaptant en conséquence la relation (32), ou la table de correspondance utilisée.

La présente invention peut en particulier être appliquée pour la commande de suspensions asservies, par exemple pour commander la dureté de la suspension notamment pour une compensation d'usure.

De préférence, les moyens de visualisationn 100 sont adaptés pour délivrer une information spécifique pour chacune des suspensions, soit sous forme d'un témoin d'alarme dans le cas d'une comparaison avec une valeur seuil comme précédemment évoqué, soit sous forme d'un affichage analogique de chacun des coefficients c mesurés.

**Revendications**

1. Procédé de contrôle de la suspension d'un véhicule comprenant les étapes consistant à :

i) générer à l'aide d'un capteur (10, 11, 12, 13) un signal électrique représentatif des oscillations de la suspension,

ii) filtrer (25) le signal électrique pour retenir uniquement les oscillations générées par les masses non suspendues du véhicule et l'effet ressort du pneumatique,

iii) déterminer (40) le rapport entre deux extrema du signal filtré, caractérisé par le fait que l'étape ii) de filtrage consiste à retenir uniquement les oscillations générées à une fréquence de l'ordre de 12 Hz et notamment à éliminer les oscillations créées à une fréquence de l'ordre de 1 Hz, ainsi que les fréquences supérieures à 15 Hz, le procédé étant en outre caractérisé par le fait qu'il comprend l'étape supplémentaire consistant à iv) déterminer (95) la valeur d'un paramètre représentatif du coefficient de frottement visqueux c de l'amortisseur sur la base de la relation

$$c = E \cfrac{Ln\cfrac{S_{11}}{S_{12}}}{\sqrt{\pi^2 + Ln^2\cfrac{S_{11}}{S_{12}}}} + G \tag{32}$$

dans laquelle :

E et G représentent des constantes liées aux caractéristiques du véhicule, et

$S_{11}$ et $S_{12}$ représentent les amplitudes des deux extrema successifs.

2. Procédé de contrôle selon la revendication 1, caractérisé par le fait que le paramètre déterminé à l'étape iv) est obtenu à l'aide d'une table de correspondance entre les rapports d'extrema $S_{11}/S_{12}$ d'une part et la valeur recherchée du paramètre d'autre part.

3. Procédé de contrôle selon la revendication 2, caractérisé par le fait que la table de correspondance est remplie à l'aide de la relation (32).

4. Procédé de contrôle selon la revendication 2, caractérisé par le fait que la table de correspondance est remplie sur la base d'une approximation de la courbe définie par la relation (32) sous forme d'une succession de segments linéaires de pentes différentes.

5. Procédé de contrôle selon l'une des revendications 1 à 4, caractérisé par le fait qu'il comprend l'étape intermédiaire (50) consistant à éliminer les valeurs du rapport $S_{11}/S_{12}$ établi à l'étape iii) qui ne sont pas comprises dans une gamme prédéterminée, de préférence 1 à 3.

6. Procédé de contrôle selon l'une des revendications 1 à 5, caractérisé par le fait qu'il comprend la réitération de l'étape iii) pour une pluralité de paire d'extrema successifs, et l'établissement d'une moyenne (70) de l'ensemble des rapports obtenus.

7. Procédé de contrôle selon la revendication 6, caractérisé par le fait qu'il comprend de plus l'étape (80) consistant à éliminer les valeurs de rapport qui s'écartent de la moyenne de l'ensemble des rapports obtenus, d'au moins une valeur de tolérance prédéterminée, et à établir une seconde moyenne (90) sur la base des rapports non éliminés.

8. Procédé de contrôle selon l'une des revendications 1 à 7, caractérisé par le fait qu'il comprend l'étape supplémentaire (100) consistant à comparer le paramètre déterminé à l'étape iv) avec une valeur de seuil et à afficher une alarme lorsque la valeur du paramètre tombe en dessous de la valeur seuil.

9. Procédé de contrôle selon l'une des revendications 1 à 8, caractérisé par le fait qu'il comprend l'étape supplémentaire (100) consistant à exploiter, par exemple par visualisation, une information analogique liée à la valeur du paramètre déterminé à l'étape iv).

10. Dispositif de contrôle pour la mise en œuvre du procédé conforme à l'une des revendications 1 à 9, caractérisé par le fait qu'il comprend :

un capteur (10, 11, 12, 13) adapté pour générer un signal électrique représentatif des oscillations de la suspension,

des moyens de filtrage (25) adaptés pour retenir uniquement les oscillations générées par les masses non suspendues du véhicule et l'effet ressort du pneumatique,

des moyens de traitement principaux (30) pour déterminer le rapport entre deux extrema du signal filtré, caractérisé par le fait que les moyens de filtrage (25) comprennent un filtre pase-bande possédant une bande passante comprise entre 9 et 15 Hz et caractérisé en outre par

des moyens de traitement auxiliaires (95) adaptés pour déterminer la valeur d'un paramètre représentatif du coefficient de frottement visqueux de l'amortisseur sur la base de la relation :

$$c = E \; \frac{Ln \dfrac{S_{11}}{S_{12}}}{\sqrt{\pi^2 + Ln^2 \dfrac{S_{11}}{S_{12}}}} + G$$

relation dans laquelle :

E et G représentent des constantes liées aux caractéristiques du véhicule, et

$S_{11}$ et $S_{12}$ représentent les amplitudes des deux extrema successifs.

11. Dispositif de contrôle selon la revendication 10, caractérisé par le fait que les moyens de traitement auxiliaires (95) comprennent une table de correspondance entre les rapports d'extrema ($S_{11}/S_{12}$) d'une part, et la valeur recherchée du paramètre d'autre part.

12. Dispositif de contrôle selon l'une des revendications 10 et 11, caractérisé par le fait qu'il comprend des moyens de comparaison (100) adaptés pour comparer le paramètre défini par les moyens de traitement auxiliaires (95) avec une valeur de seuil et à afficher une alarme lorsque la valeur de ce paramètre tombe en dessous de la valeur seuil.

13. Dispositif de contrôle selon l'une des revendications 10 à 12, caractérisé par le fait qu'il comprend des moyens de visualisation (100) adaptés pour visualiser une information analogique liée à la valeur du paramètre défini par les moyens de traitement auxiliaires (95).

14. Dispositif de contrôle selon l'une des revendications 10 à 13, caractérisé par le fait que le capteur (10) est un capteur sensible au déplacement relatif masses suspendues/masses non suspendues.

15. Dispositif de contrôle selon l'une des revendications 10 à 14, caractérisé par le fait que le capteur (10) est une cellule piézoélectrique.

16. Dispositif de contrôle selon l'une des revendications 10 à 15, caractérisé par le fait que le capteur (10) est disposé entre deux spires d'un ressort à boudin de la suspension.

17. Dispositif de contrôle selon l'une des revendications 10 à 16, caractérisé par le fait que le capteur (10) est un capteur de force intercalé entre le ressort de la suspension et les masses suspendues ou non suspendues.

18. Dispositif de contrôle selon l'une des revendications 10 à 13, caractérisé par le fait que le capteur (10) est un capteur de force placé sur l'amortisseur de la suspension.

19. Dispositif de contrôle selon l'une des revendications 10 à 13, caractérisé par le fait que le capteur (10) est un accéléromètre placé sur les masses non suspendues.

20. Application du dispositif de contrôle conforme à l'une des revendications 10 à 19 pour la commande de suspensions asservies, notamment pour la commande de la dureté de suspension.

## Claims

1. Method for checking the suspension of a vehicle comprising the stages consisting of :

i) generating by means of a sensor (10, 11, 12, 13) an electrical signal representative of the oscillations of the suspension,

ii) filtering (25) the electrical signal in order to retain solely the oscillations generated by the non-suspended masses of the vehicle and the spring effect of the tyre,

iii) determining (40) the ratio between two extremes of the filtered signal, characterised by the fact that the filtering stage ii) consists of retaining solely the oscillations generated at a frequency of the order of 12 Hz and in particular of eliminating the oscillations created at a frequency of the order of 1 Hz, as well as frequencies greater than 15 Hz, the method also being characterised by the fact that it comprises the additional stage consisting of iv) determining (95) the value of a parameter representative of the coefficient of viscous friction c of the shock absorber on the basis of the relationship

$$c = E \cfrac{Ln \dfrac{S_{11}}{S_{12}}}{\sqrt{\pi^2 + Ln^2 \dfrac{S_{11}}{S_{12}}}} + G \qquad (32)$$

in which :

E and G represent constants linked with the characteristics of the vehicle, and
$S_{11}$ and $S_{12}$ represent the amplitudes of two successive extremes.

2. Checking method according to Claim 1, characterised by the fact that the parameter determined in stage iv) is obtained by means of a table of correspondence between the ratios of extremes $S_{11}/S_{12}$ on the one hand and the desired value of the parameter on the other hand.

3. Checking method according to Claim 2, characterised by the fact that the table of correspondence is filled by means of the relationship (32).

4. Checking method according to Claim 2, characterised by the fact that the table of correspondence is filled on the basis of an approximation of the curve defined by the relationship (32) in the form of a succession of linear segments of different inclinations.

5. Checking method according to one of Claims 1 to 4, characterised by the fact that it comprises the intermediate stage (50) consisting of eliminating the values of the ratio $S_{11}/S_{12}$ established in stage iii) which are not comprised in a predetermined range, of preferably 1 to 3.

6. Checking method according to one of Claims 1 to 5, characterised by the fact that it consists of the repetition of stage iii) for a plurality of pairs of successive extremes and the establishment of an average (70) of all the ratios obtained.

7. Checking method according to Claim 6, characterised by the fact that it comprises in addition the stage (80) consisting of eliminating the ratio values which deviate from the average of all the ratios obtained, by at least a predetermined tolerance value and of establishing a second average (90) on the basis of the ratios not eliminated.

8. Checking method according to one of Claims 1 to 7, characterised by the fact that it comprises the additional stage (100) consisting of comparing the parameter determined in stage iv) with a threshold value and of displaying an alarm when the value of the parameter drops below the threshold value.

9. Checking method according to one of Claims 1 to 8, characterised by the fact that it comprises the additional stage (100) consisting of exploiting, for example by visualisation, analog information linked with the value of the parameter determined in stage iv).

10. Checking apparatus for carrying out the method according to one of Claims 1 to 9, characterised by the fact that it comprises :

a sensor (10, 11, 12, 13) adapted for generating an electrical signal representative of the oscillations of the suspension,

filtering means (25) adapted to retain solely the oscillations generated by the non-suspended masses of the vehicle and the spring effect of the tyre,

main processing means (30) for determining the ratio between two extremes of the filtered signal, characterised by the fact that the filtering means (25) comprise a passband filter having a passband comprised between 9 and 15 Hz and also characterised by

auxiliary processing means (95) adapted to determine the value of a parameter representative of the coefficient of viscous friction of the shock absorber on the basis of the relationship :

$$c = E \cfrac{Ln \dfrac{S_{11}}{S_{12}}}{\sqrt{\pi^2 + Ln^2 \dfrac{S_{11}}{S_{12}}}} + G$$

in which relationship : E and G represent constants linked with the characteristics of the vehicle, and $S_{11}$ and $S_{12}$ represent the amplitudes of two successive extremes.

11. Checking apparatus according to Claim 10, characterised by the fact that the auxiliary processing means (95) comprise a table of correspondence between the ratios of extremes $(S_{11}/S_{12})$ on the one hand and the desired value of the parameter on the other hand.

12. Checking apparatus according to one of Claims 10 and 11, characterised by the fact that it comprises comparison means (100) adapted for comparing the parameter defined by the auxiliary processing means (95) with a threshold value and of displaying an alarm when the value of this parameter drops below the threshold value.

13. Checking apparatus according to one of Claims 10 to 12, characterised by the fact that it comprises visualisation means (100) adapted for visualising analog information linked with the value of the parameter defined by the auxiliary processing means (95).

14. Checking apparatus according to one of Claims 10 to 13, characterised by the fact that the sensor (10) is a sensor sensitive to the relative displacement of the suspended masses/non-suspended masses.

15. Checking apparatus according to one of Claims 10 to 14, characterised by the fact that the sensor (10) is a piezoelectric cell.

16. Checking apparatus according to one of Claims 10 to 15, characterised by the fact that the sensor (10) is disposed between two turns of a spiral spring of the suspension.

17. Checking apparatus according to one of Claims 10 to 16, characterised by the fact that the sensor (10) is a force sensor interposed between the spring of the suspension and the suspended or non-suspended masses.

18. Checking apparatus according to one of Claims 10 to 13, characterised by the fact that the sensor (10) is a force sensor disposed on the shock absorber of the suspension.

19. Checking apparatus according to one of Claims 10 to 13, characterised by the fact that the sensor (10) is an accelerometer disposed on the non-suspended masses.

20. Application of the checking apparatus according to one of Claims 10 to 19 for controlling servo suspensions, in particular for controlling the hardness of the suspension.


**Patentansprüche**

1. Verfahren zum Überwachen der Aufhängung eines Fahrzeuges, mit den Schritten :

(i) Erzeugen eines für die Schwingungen der Aufhängung repräsentativen Signals mit Hilfe eines Aufnehmers (10, 11, 12, 13),

(ii) Filter (25) des elektrischen Signals zum Zurückhalten einzig und allein der von den nichtgefederten Massen des Fahrzeugs und durch den Federeffekt der Luftbereifung erzeugten Schwingungen,

(iii) Bestimmen (40) des Verhältnisses zweier Extrema des gefilterten Signals, dadurch gekennzeichnet, daß der Schritt des Filterns (ii) darin besteht, einzig und allein die bei einer Frequenz der Größenordnung 12 Hz erzeugten Schwingungen zurückzuhalten und insbesondere die mit einer Frequenz der Größenordnung 1 Hz erzeugten Schwingungen zu eliminieren, ebenso wie die Frequenzen höher als 15 Hz, wobei das Verfahren weiterhin dadurch gekennzeichnet ist, daß es den zusätzlichen Schritt (iv) des Bestimmens (95) des Wertes eines repräsentativen Parameters des Koeffizienten der viskosen Reibung c der Dämpfungseinrichtung auf der Grundlage der Beziehung

$$c = E \frac{Ln \frac{S_{11}}{S_{12}}}{\sqrt{\pi^2 + Ln^2 \frac{S_{11}}{S_{12}}}} + G \qquad (32)$$

aufweist, wobei :

E und G mit den Kennwerten des Fahrzeugs verbundene Konstanten darstellen und

$S_{11}$ und $S_{11}$ die Amplituden der zwei aufeinanderfolgenden Extrema darstellen.

2. Überwachungsverfahren nach Anspruch 1, dadurch gekennzeichnet, daß der in Schritt (iv) gesuchte Parameter mit Hilfe einer Korrespondenztabelle zwischen dem Verhältnis der Extrema $S_{11}/S_{12}$ einerseits und dem ermittelten Wert des Parameters andrerseits erhalten wird.

3. Überwachungsverfahren nach Anspruch 2, dadurch gekennzeichnet, daß die Korrespondenztabelle mittels der Beziehung (32) ausgefüllt wird.

4. Überwachungsverfahren nach Anspruch 2, dadurch gekennzeichnet, daß die Korrespondenztabelle auf der Grundlage einer Näherung der durch die Beziehung (32) definierten Kurve in Form linearer Abschnitte mit unterschiedlichen Steigungen ausgefüllt wird.

5. Überwachungsverfahren nach einem der Ansprüche 1 bis 4, dadurch gekennzeichnet, daß es den Zwischenschritt (50) aufweist, bei dem die in dem Schritt (iii) ermittelten Werte des Verhältnisses $S_{11}/S_{12}$, die nicht in einem vorbestimmten Bereich, vorzugsweise zwischen 1 und 3 enthalten sind, eliminiert werden.

6. Überwachungsverfahren nach einem der Ansprüche 1 bis 5, dadurch gekennzeichnet, daß es die Wiederholung des Schrittes (iii) für eine Vielzahl von Paaren aufeinanderfolgender Extrema sowie die Ermittlung eines Mittelwertes (70) der Gesamtheit der erhaltenen Verhältniswerte aufweist.

7. Überwachungsverfahren nach Anspruch 6, dadurch gekennzeichnet, daß es weiterhin den Schritt (80) aufweist, bei dem die Verhältniswere, welche vom Mittelwert der Gesamtheit der erhaltenen Verhältniiswerte wenigstens um einen vorher festgelegten Toleranzwert entfernt liegen, eliminiert werden und ein zweiter Mittelwert (90) auf der Grundlage der nicht eliminierten Verhältniswerte gebildet wird.

8. Überwachnungsverfahren nach einem der Ansprüche 1 bis 7, dadurch gekennzeichnet, daß es den zusätzlichen Schritt (100) aufweist, bei dem der in Schritt (iv) ermittelte Parameter mit einem Schwellenwert verglichen wird und ein Alarm angezeigt wird, wenn der Wert des Parameters unter den Schwellenwert fällt.

9. Überwachungsverfahren nach einem der Ansprüche 1 bis 8, dadurch gekennzeichnet, daß es den zusätzlichen Schritt (100) aufweist, bei dem, beispielsweise durch Sichtbarmachen, eine mit dem im Schritt (iv) bestimmten Parameter verbundene Analoginformation ausgewertet wird.

10. Überwachnungsvorrichtung zum Durchführen des Verfahrens nach einem der Ansprüche 1 bis 9, dadurch gekennzeichnet, daß sie

einen Aufnehmer (10, 11, 12, 13) zum Erzeugen eines für die Schwingungen der Aufhängung repräsentativen Signals,

Filtereinrichtungen (25) zum eindeutigen Zurückhalten der von den nichtgefederten Massen des Fahrzeugs und durch den Federeffekt der Luftbereifung erzeugten Schwingungen,

Hauptverarbeitungseinrichtungen (30) zum Bestimmen des Verhältnisses zweier Extremas des gefilterten Signals aufweist, dadurch gekennzeichnet, daß die Filtereinrichtungen (25) ein Bandpaßfilter mit einem Bandpaß zwischen einschließlich 9 und 15 Hz aufweisen, und weiterhin gekennzeichnet durch

Hilfsverarbeitungseinrichtungen (95) zum Bestimmen des Wertes eines repräsentativen Parameters des Koeffizienten der viskosen Reibung der Dämpfungseinrichtung auf der Grundlage der Beziehung

$$c = E \frac{Ln \dfrac{S_{11}}{S_{12}}}{\sqrt{\pi^2 + Ln^2 \dfrac{S_{11}}{S_{12}}}} + G \qquad (32)$$

wobei :

E und G mit den Kennwerten des Fahrzeugs verbundene Konstanten darstellen und

$S_{11}$ und $S_{12}$ die Amplituden der zwei aufeinanderfolgenden Extremwerte darstellen.

11. Überwachungsvorrichtung nach Anspruch 10, dadurch gekennzeichnet, daß die Hilfsverarbeitungseinrichtungen (95) eine Korrespondenztabelle zwischen dem Verhältnis der Extrema ($S_{11}/S_{12}$) einerseits und dem gesuchten Wert des Parameters andrerseits enthalten.

12. Überwachungsvorrichtung nach einem der Ansprüche 10 und 11, dadurch gekennzeichnet, daß sie Vergleichseinrichtungen (100) zum Vergleichen des durch die Hilfsverarbeitungseinrichtungen (95) definierten Parameters mit einem Schwellenwert und zum Anzeigen eines Alarms, wenn der Wert des parameters unter dem Schwellenwert fällt, aufweist.

13. Überwachnungsvorrichtung nach einem der Ansprüche 10 bis 12, dadurch gekennzeichnet, daß sie Visualisierungseinrichtungen (100) zum Sichtbarmachen einer mit dem durch die Hilfsverarbeitungseinrichtungen (95) definierten Parameter verbundenen Analoginformation aufweist.

14. Überwachungsvorrichtung nach einem der Ansprüche 10 bis 13, dadurch gekennzeichnet, daß der Aufnehmer (10) ein auf die relative Verschiebung gefederte Massen/nichtgefederte Massen ansprechender Aufnehmer ist.

15. Überwachungsvorrichtung nach einem der Ansprüche 10 bis 14, dadurch gekennzeichnet, daß der Aufnehmer (10) eine piezoelektrische Zelle ist.

16. Überwachungsvorrichtung nach einem der Ansprüche 10 bis 15, dadurch gekennzeichnet, daß der Aufnehmer (10) zwischen zwei Windungen einer Sprungfeder der Aufhängung angeordnet ist.

17. Überwachungsvorrichtung nach einem der Ansprüche 10 bis 16, dadurch gekennzeichnet, daß der Aufnehmer (10) ein Kraftaufnehmer zwischen der Feder der Aufhängung und den gefederten oder nichtgefederten Massen ist.

18. Überwachungsvorrichtung nach einem der Ansprüche 10 bis 13, dadurch gekennzeichnet, daß der Aufnehmer (10) ein auf der Dämpfungseinrichtung der Aufhängung angeordneter Kraftaufnehmer ist.

19. Überwachungsvorrichtung nach einem der Ansprüche 10 bis 13, dadurch gekennzeichnet, daß der Aufnehmer (10) ein auf den nichtgefederten Massen angeordneter Beschleunigungsmesser ist.

20. Anwendung der Überwachungsvorrichtung nach einem der Ansprüche 10 bis 19 für die Steuerung der geregelten Aufhängung, insbesondere für die Steuerung der Härte der Aufhängung.

FIG_1

F(N)

Amortisseur neuf

Exemple de seuil acceptable pour le cœfficient C

𝒰(m/ʂ)

COMPRESSION

DETENTE

FIG_2

AMORTISSEUR NORMAL

1 sec

1 sec

FIG_3

AMORTISSEUR HORS SERVICE

FIG.4A

FIG.4B

FIG.5A

FIG.5B

FIG.6

$$\frac{Ad1}{\upsilon} \ B_1 \exp^{-Z_A W_A t} \cdot \sin(W_{Ad} \ t + \varphi_1) +$$

$$\frac{Ad1}{\upsilon} \ B_2 \exp^{-Z_B W_B t} \cdot \sin(W_{Bd} \ t + \varphi_2)$$

FIG.7

$$\frac{Ad1}{\upsilon} \ B_2 \exp^{-Z_B W_B t} \cdot \sin(W_{Bd} t + \varphi_2)$$

# FIG.8

# FIG_9

# FIG. 10

COEFF. DE FROTTEMENT VISQUEUX : C $\left(N/M/S\right)$

RAPPORT DES MESURES D'AMPLITUDE DU SIGNAL

$\left(S\,11\,/\,S\,12\right)$

10 CAPTEUR
11 CAPTEUR
12 CAPTEUR
13 CAPTEUR

GESTION ROUE / ROUE — 20

FILTRAGE — 25

30

MEMORISATION DES AMPLITUDES — 35

ETABLISSEMENT RAPPORTS $S_{11}/S_{12}$ — 40

ELIMINATION VALEURS NON COMPRISES ENTRE 1 et 3 — 50

MEMORISATION — 60

ETABLISSEMENT UNE MOYENNE — 70

ELIMINATION VALEURS S'ECARTANT DE LA MOYENNE — 80

ETABLISSEMENT SECONDE MOYENNE — 90

DETERMINATION COEFFICIENT C — 95

COMPARAISON / AFFICHAGE — 100

## FIG. 11